# EUROPEAN PATENT APPLICATION

(11) **EP 2 770 444 A1**
(43) Date of publication of application: **27.08.2014**
(21) Application number: 13156596.2
(22) Date of filing: 25.02.2013
(51) Int. Cl.: G06F 17/27, G01C 21/36, G06F 3/023

(54) **Navigation device having next valid character search tree**

(71) Applicant: Harman Becker Automotive Systems GmbH, 76307 Karlsbad (DE)
(72) Inventor: Spindler, Carsten-Christian, 76135 Karlsruhe (DE); Fischer, Martin, 80805 München (DE); Kunath, Peter, 80999 München (DE)
(74) Representative: Meier, Florian

(57) **Abstract**

A navigation device comprises a search tree which indicates next valid characters. The search tree has a plurality of nodes (21, 25-27, 31, 35-38). The nodes (21, 25-27, 31, 35-38) are respectively associated with a character. At least some of the nodes (21) respectively include a predetermined indicator (23) to indicate that there is an alternate spelling for a character with which the respective node (21) is associated. A processor (2) is configured to receive a character input (59) and to identify at least one next valid character using the search tree. The processor (2) is configured to identify the at least one next valid character in dependence on whether the predetermined indicator (23) in the search tree indicates that another character has an alternate spelling, the alternate spelling of the other character being the character input.

## Description

### Technical Field

Embodiments of the invention relate to next valid character searches. Embodiments of the invention relate in particular to a navigation device and a method of determining a next valid character which uses a search index configured as a search tree.

### Background

Navigation devices are known which perform functions such as route searches between two locations. Modern navigation devices also may provide additional functionalities, such as serving as a travel guide that outputs, upon demand, information on points of interest (POI), or which fulfils communication functions. Information stored in a data base of a navigation device may include names of cities, names of streets or names of POIs. The data may alternatively or additionally also include additional textual information. Names of cities and streets are only one important example of textual data for which next valid character searches are desired, e.g. when inputting a destination or POI or when retrieving travel guide information.

To assist a user in inputting names, navigation devices may be configured to provide information on all potential next valid characters. This reduces or eliminates the risk that the user inputs a name which is not regarded valid by the navigation device. For illustration, by providing information on next valid characters and/or by limiting possible character inputs based on information on next valid characters, the inputting of a destination city or destination street may be prevented if the navigation device does not store information on the location of the respective city or street.

Information on next valid characters should desirably be provided without substantial delays, i.e., while the user is still in the process of inputting a name. In order to allow information on next valid characters to be retrieved quickly, dedicated search structures may be used. Such search structures may be specific search trees, which are also referred to as next valid character (NVC) trees. NVC trees may be used for different search paths. For illustration, there may respectively be a NVC tree for valid city names in one country or in several countries. There may be a NVC tree for valid road names in one city, and another NVC tree for valid road names in other cities. Leafs of the NVC tree may point to data base objects, for example. Alternatively, leafs of the NVC trees may also merely indicate that there are no valid names which include more characters, or may point to other data structures.

A general problem encountered by many users when inputting a string of characters in a navigation device are diacritical characters. Generally, a diacritical character is a character in which is a glyph added to a letter. This glyph is also referred to as diacritic. One example for a diacritic is an umlaut symbol (also referred to as diaeresis). Characters such as "ä", "ö", or "ü" are exemplary for diacritical characters. Other non-limiting examples of diacritics include accent glyphs, circumflex glyphs, or ring glyphs which may be added to a letter.

Diacritical characters may be difficult for some users to input via a user interface. Such difficulties may arise from the fact that the character string represents a name in a language different from the country where the navigation device is normally used, such that the user may not be familiar with the diacritical characters in the country where a destination or POI is located. The difficulties may also arise from a keyboard layout shown on the input interface which may require more complicated user actions to correctly enter a diacritical character. This makes it challenging for users to input a word or beginning of a word which includes a diacritical character.

Some approaches used for assisting users in inputting diacritical characters consist in offering options to a user for selecting from among diacritical and non-diacritical characters prior to an input action. For illustration, when a user inputs a vowel on a keyboard, one or several diacritical versions of the vowel may be presented to the user who can then select therefrom. Such approaches may not be convenient as they require additional input actions. Further, if the user is not familiar with which diacritic is actually used on a letter which he intends to input, he may still end up inputting an incorrect diacritical character. Conventionally, such an incorrect input action may compromise the results obtained in a NVC search.

### Summary

There is a need in the art for navigation devices and methods which reliably assist a user in inputting a string of characters, even when there is an alternate spelling for one or several of the characters. There is in particular a need for such a navigation device and method which provide robust NVC search results even when the user inputs an alternate spelling for a character.

According to an embodiment, a navigation device is provided. The navigation device comprises a search tree which indicates next valid characters. The search tree has a plurality of nodes, which are respectively associated with a character. At least some of the nodes respectively include a predetermined indicator to indicate that there is an alternate spelling for a character with which the respective node is associated. The navigation device comprises a processor configured to receive a character input and to identify at least one next valid character using the search tree. The processor is configured to identify the at least one next valid character in dependence on whether the predetermined indicator in the search tree indicates that another character has an alternate spelling, the alternate spelling of the other character being the character input.

By adding information to nodes of the search tree to indicate whether there is an alternate spelling for a character associated with a node, the NVC search can be performed in manner which is more robust against inputting mistakes. For illustration, when a non-diacritical character is defined as an alternate spelling for a diacritical character, the processor may identify next valid characters by continuing a search path through a node associated with the diacritical character, even when its non-diacritical counterpart was input.

It is not required to duplicate sub-trees of the NVC tree to attain robustness against inputting errors in which the user inputs the alternate spelling of a character. This is beneficial in terms of storage space requirements.

According to another embodiment, a search tree for a navigation device is provided. The search tree has a plurality of nodes, which are respectively associated with a character. At least some of the nodes respectively include a predetermined indicator to indicate that there is an alternate spelling for a character with which the respective node is associated.

The nodes which are associated with a character for which there is an alternate spelling may additionally also store information on the alternate spelling. For illustration, a node associated with a diacritical character may include the predetermined indicator and information on the non-diacritical character which is the alternate spelling for the diacritical character.

According to another embodiment, a method of determining a next valid character is provided. The method comprises receiving a character input. The method comprises identifying at least one next valid character from a search tree which indicates next valid characters. The search tree has a plurality of nodes. The nodes are respectively associated with a character and at least some of the nodes respectively include a predetermined indicator to indicate that there is an alternate spelling for a character with which the respective node is associated. The at least one next valid character is identified in dependence on whether the predetermined indicator in the search tree indicates that another character has an alternate spelling, the alternate spelling of the other character being the character input.

The search tree may be stored in a storage device of a navigation device.

Next valid characters may be output via an output interface of the navigation device.

According to another embodiment, there is provided a method of generating a search tree for next valid character search. The method comprises generating nodes of the search tree, each node being respectively associated with a character. The method comprises determining whether there is an alternate spelling for a character with which a node is associated. The method comprises including a predetermined indicator in the node to indicate that there is an alternate spelling for the character with which the node is associated.

The method of generating the search tree may further comprise including information on the alternate spelling in the node if there is an alternate spelling for the character with which the node is associated.

In the method of generating the search tree, determining whether there is an alternate spelling may be performed by determining whether the character is a diacritical character.

In the various embodiments, the characters which have an alternate spelling may comprise diacritical characters. The alternate spelling may then be the non-diacritical counterpart of the diacritical character, i.e., the letter which is obtained when removing the diacritic from the diacritical character.

The navigation device may be a navigation device for vehicular navigation. The navigation device may be fixedly installed in a vehicle. The navigation device may be a portable navigation device.

It is to be understood that the features mentioned above and those to be explained below can be used not only in the respective combinations indicated, but also in other combinations or in isolation.

### Brief description of the drawings

The foregoing and other features of embodiments will become more apparent from the following detailed description of embodiments when read in conjunction with the accompanying drawings. In the drawings, like reference numerals refer to like elements.
Fig. 1 is a schematic block diagram of a navigation device according to an embodiment.
Fig. 2 is a schematic representation of a search tree for performing a next valid character search according to an embodiment.
Fig. 3 is a schematic representation of data entries of a search tree for performing a NVC search according to an embodiment.
Fig. 4 is a schematic representation of data entries of a search tree for performing a next valid character search according to an embodiment.
Fig. 5 is a flow chart of a method of performing a next valid character search according to an embodiment.
Fig. 6 is a flow chart of a method of generating a search tree according to an embodiment.
Fig. 7 is a schematic representation of data entries of a search tree for performing a next valid character search according to another embodiment.
Fig. 8 and Fig. 9 show an implementation of a data structure for a node of a search tree according to an embodiment.
Fig. 10 is a schematic representation of a search tree for performing a next valid character search according to an embodiment.
Fig. 11 is a schematic representation of a search tree for performing a next valid character search using an alternative technique which is not an embodiment.

### Detailed description

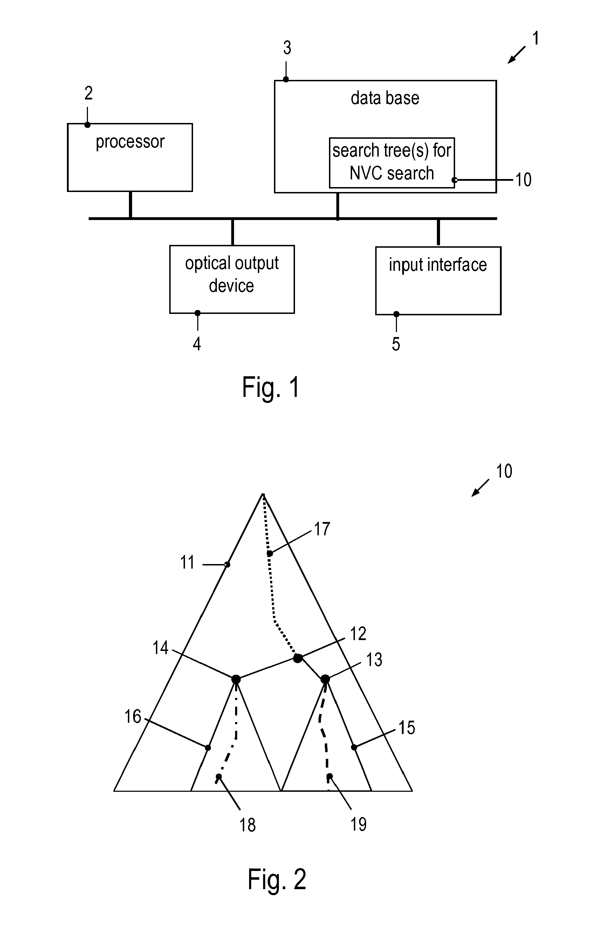

Fig. 1 schematically illustrates a vehicle navigation device 1 according to an embodiment. The navigation device 1 comprises a processor 2 controlling the operation of the navigation device 1, e.g. according to control instructions stored in a memory. The processor 2 may comprise a central processing unit, for example in form of one or more processor chips, digital signal processing devices or application-specific integrated circuits. The navigation device 1 further includes a data base 3. The data base 3 may comprise any one, or any combination, of various types of storage or memory media, such as random access memory, flash memory or a hard drive, but also removable memories such as a compact disk (CD), a DVD, a memory card or the like. The navigation device 1 also includes an output interface 4 for outputting information to a user. The output interface 4 may include an optical output device, an audio output device, or a combination thereof. The navigation device 1 also includes an input interface 5 which allows a user to character inputs in a sequential manner. The input interface 5 may allow a user to input textual information or voice information. The input interface 5 may be configured to display a keyboard layout or a portion of a keyboard layout.

The navigation device may include additional components, such as a position sensor and/or a wireless receiver and/or a vehicle interface. The position sensor may be adapted to determine the current position of the vehicle in which the navigation device 1 is installed. The position sensor may comprise a GPS (Global Positioning System) sensor, a Galileo sensor, a position sensor based on mobile telecommunication networks and the like. The wireless receiver may be configured to receive information for updating the data base 3 stored in the storage device of the navigation device. The vehicle interface may allow the processor 2 to obtain information from other vehicle systems or vehicle status information via the vehicle interface. The vehicle interface may for example comprise a CAN (controller area network) or MOST (Media Oriented devices Transport) interface.

The data base 3 includes data 10 which represent a search tree for performing next valid character (NVC) searches. The navigation device may comprise several separate search trees. For illustration, there may respectively be a NVC tree for valid city names in one country or in several countries. There may be a NVC tree for valid road names in one city, and another NVC tree for valid road names in other cities. There may be a NVC tree for valid point of interest (POI) names or for other names included in an electronic travel guide. At least one search tree of the navigation device 1 is configured as will be explained in more detail with reference to Fig. 2 to Fig. 10. When there are plural distinct search trees, several or all of the search trees may be configured as explained with reference to Fig. 2 to 10 below.

At least one of the search trees for NVC searches may correspond to names of various objects. Examples include names of valid destinations, such as destination countries, destination cities, or destination streets. At least one of the search trees for performing the NVC searches may also correspond to other character strings, such as names of POIs or words for which there are entries in an electronic travel guide.

The processor 2 may access and utilize the data 10 when a user starts inputting a character string. For illustration, the processor 2 may determine possible next valid characters in response to a sub-string which was already entered by a user at the input interface 5. The processor 2 may control the optical output device 4 to output the next valid characters. Alternatively or additionally, the processor 2 may control the input interface 5 so as to prevent, or otherwise bar, the inputting of characters which do not correspond to next valid characters.

When performing a NVC search, the processor 2 may start at a root node of a search tree. The search tree may be selected based on the type of name which is to be input, such as country or city or road. As will be described in more detail in the following, the navigation device 1 uses a search tree which includes information on whether there is an alternate spelling for a character. The processor 2 may use this information for improved robustness against inputting mistakes.

For illustration, for a diacritical character located at a certain position in a string, the search tree 10 may indicate the non-diacritical counterpart to be an alternate spelling. When the user inputs this non-diacritical counterpart, the processor 2 will identify next valid characters which are child nodes of the node associated with the non-diacritical counterpart. This would correspond to the assumption that the user actually intended to input a non-diacritical character. Additionally, the processor 2 will also identify next valid characters which are child nodes of the node associated with the diacritical character for which the non-diacritical counterpart is indicated to be an alternate spelling in the search tree 10. Thereby, the possible next valid characters are correctly identified when the correct writing of the word includes the diacritical character, but the user mistakenly inputted the non-diacritical character.

Fig. 2 is a schematic representation of data 10 which includes a search tree for performing NVC searches. The data 10 may be included in different portions of the data base 3. For illustration, if the data base 3 includes separate layers for names or for POIs, the data 10 may be included in the respective layer.

The data 10 includes a search tree 11. For illustration rather than limitation, the search tree 11 may represent names of streets or names of cities in a certain geographical area. The search tree 11 represents next valid characters for name input at the input interface 5 of the navigation device. As more characters of a character string, e.g. a city name, are successively entered, a search path traverses the search tree 11. The search tree 11 may be organized such that the child nodes of the current node represent the next valid characters. The processing device 2 may readily retrieve these next valid characters and may output them via the optical output device 4 and/ or may control the input interface 5 based on the next valid characters retrieved from the search tree 11.

A node 14 of the search tree is associated with a diacritical character (e.g. an umlaut vowel). Another node 13 represents the same character without the diacritic (e.g. the vowel without umlaut glyph). The nodes 13, 14 have the same parent node 12. Contrary to conventional NVC trees, the node 14 associated with the diacritical character includes a predetermined indicator to indicate that there is an alternate spelling. Information on the alternate spelling, i.e. the non-diacritical counterpart, may also be stored in node 14 or may be stored in a separate data structure.

A sub-tree 15 starts at the node 13 which is associated with the non-diacritical character. The sub-tree 15 may include next valid characters only for those names which have the non-diacritical character represented by node 13 at the respective position in the name. It is not required to duplicate data from sub-tree 16 in the sub-tree 15.

The sub-tree 16 starts at the node 14 which is associated with the diacritical character. The sub-tree 16 may include next valid characters only for those names which have the diacritical character represented by node 14 at the respective position in the name.

As a user inputs characters of a string, the processor traverses the search tree 11 along a search path 17, reaching node 12. In response to receiving the diacritical character of node 14 as character input, the processor 2 may continue the next valid character search in sub-tree 16 only. The search path may continue through sub-tree 16, as indicated at 18.

If the non-diacritical character of node 13 is received as character input, the processor 2 may continue the next valid character search both in sub-tree 15 and in sub-tree 16. Next valid characters are identified as union of the next valid characters identified in the sub-tree 15 and next valid characters identified in the sub-tree 16. The processor 2 may continue the search for next valid characters in both sub-trees 15, 16 in parallel as indicated by search paths 18 and 19, until an character input is received for which no valid next character is identified in one of the two sub-trees. The search may then be continued in the other one of the sub-trees in which next valid characters are still consistent with the user input.

The identified next valid characters may be processed in a variety of ways, e.g. by outputting them to the user, by selecting a set of possible names, or by starting a retrieval of data associated with the remaining candidate names.

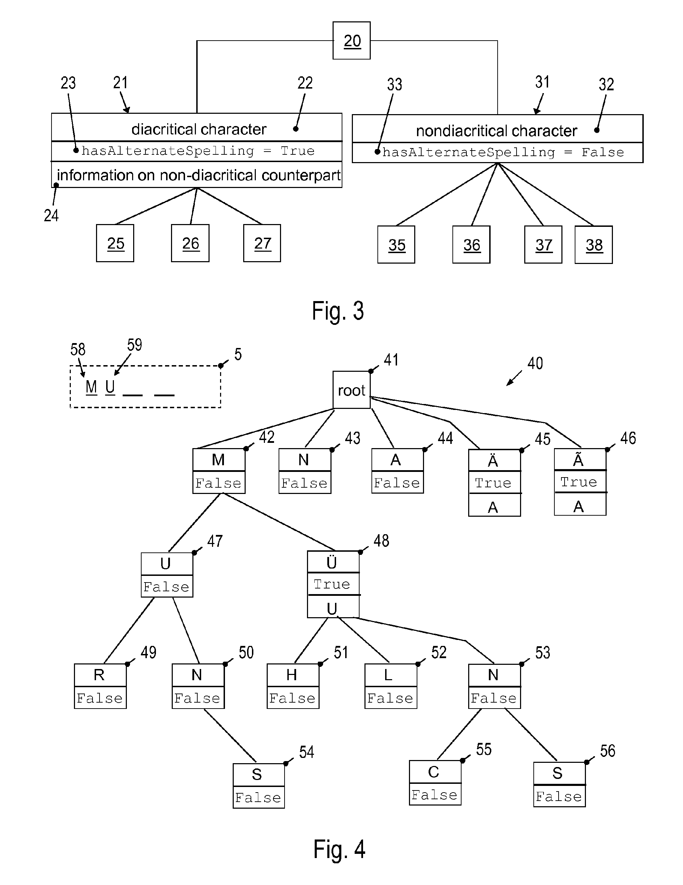

With reference to Fig. 3 to Fig. 10, implementations of nodes in search trees according to embodiments will be described in detail.

Fig. 3 shows nodes of a search tree according to an embodiment. A node 21 is associated with a diacritical character. Another node 31 is associated with a non-diacritical counterpart of the diacritical character of node 21. The node 21 associated with the diacritical character and the other node 31 associated with the non-diacritical counterpart have the same parent node 20.

Each one of the nodes 21, 31 may include control information which specifies a node type, for example.

A predetermined indicator may be stored in those nodes which represent a character for which there is an alternate spelling. The predetermined indicator may be a Boolean value which may be stored in one bit of the control information which would be unused otherwise. The predetermined indicator may be stored by setting one bit of the control information to a logical "1" (Boolean value TRUE) or "0" (Boolean value FALSE), to indicate whether there is an alternate spelling for the respective character. As long as the predetermined indicator can be stored in otherwise unused bits of a byte reserved for the control information of a node, storing the predetermined indicator does not increase storage space requirements.

The node 21 stores the diacritical character with which it is associated. One byte or plural bytes 22 may be reserved for this purpose. The predetermined indicator 23 indicates that there is an alternate spelling that is recognized by the navigation device. The predetermined indicator 23 may be represented by a given value (e.g. logical "1") of a single bit of the data representing the node 21.

When the character represented by a node has an alternate spelling, as is the case for node 21, the node 21 may also include information 24 on the alternate spelling. Storage space for the information 24 on the alternate spelling may be selectively reserved only in those nodes 21 which include the predetermined indicator 23.

The node 31 is associated with a character for which there is no alternate spelling that is recognized by the navigation device. For illustration, node 31 may be associated with a non-diacritical character which corresponds to the diacritical character represented by node 21 with the diacritic removed. The Boolean value of has Alternate spelling, which may be represented by a bit 33 in the control information of node 21, may be FALSE. This indicates that there is no alternate spelling. The node 31 may store the non-diacritical character with which it is associated. One byte or plural bytes 32 may be reserved for this purpose.

When the user has input a sub-string of a name or of another character string, a NVC search may reach node 20. The diacritical character represented by node 21 and the non-diacritical character represented by node 31 are next valid characters.

When the diacritical character represented by node 21 is received as next character input, the child nodes 25, 26, 27 of node 21 are accessed to identify next valid characters.

On the other hand, when the non-diacritical character represented by node 31 is received as next character input, the processor 2 continues the next valid character search through both node 31 and node 21. To this end, the processor 2 may determine all child nodes of node 20 which include the predetermined indicator 23 and which have the non-diacritical character represented by node 31 as alternate spelling. For node 21, this information is provided by data fields 23, 24. The search for next valid characters is continued both in a sub-tree starting at the node 31 which represents the character input and in a sub-tree starting at the node 21 which represents a character different from the character input. Thereby, the union of characters represented by child nodes 25-27 of node 21 and by child nodes 35-38 of node 31 are identified as next valid characters. Even if the user has input the non-diacritical counterpart of the diacritical character, the characters represented by the child nodes 25-27 of node 21 would still be identified as next valid characters, to account for the fact that the user may have mistakenly input the wrong character.

While only two nodes 21, 31 are schematically illustrated in Fig. 3 as child nodes of the parent node 20, the parent node 20 may have more than two child nodes. There may be more than one node which indicates the non-diacritical character of node 31 as alternate spelling.

Fig. 4 illustrates nodes of a search tree 40 of an embodiment. The Boolean values TRUE indicate that the character represented by the respective node have an alternate spelling recognized in the next valid character search. The Boolean value FALSE indicates that the character represented by the respective node does not have an alternate spelling recognized in the next valid character search. Part of the input interface 5 is also shown in Fig. 4 for explaining the operation of the processor 2.

The search tree has a root node 41. The search tree has nodes 42-55 schematically illustrated in Fig. 4. Node 46 is associated with an umlaut-A. Node 47 is associated with an A having a circumflex diacritic. The non-diacritical character "A" represented by node 45 is recognized as alternate spelling for both the umlaut-A and the A having the circumflex diacritic. Accordingly, the non-diacritical "A" may be stored in a byte of nodes 46, 47 reserved for the alternate spelling.

Node 42 associated with letter "M" has child nodes 47 and 48. Node 47 is associated with letter "U". Node 48 is associated with an umlaut-U. The non-diacritical character "U" represented by node 47 is recognized as alternate spelling for the umlaut-U. Accordingly, the non-diacritical "U" may be stored in a byte of node 48 reserved for indicating the alternate spelling.

When a user enters the character input "M" at 58 and then the character input "U" at 59, the next valid character search will be continued not only in the child nodes of node 47 associated with character "U", but also in the child nodes of node 48 associated with the diacritical character "Ü". This is because node 48 has an indicator indicating that there is an alternate spelling for the diacritical character "Ü", namely its non-diacritical counterpart.

Accordingly, when a user inputs "MUNC", the next valid character search will lead to node 55, from where it may continue to a leaf node representing the name "München".

By contrast, in a conventional technique which does not have a mechanism for improving next valid character searches for words having diacritical characters, a user would be offered only letter "S" as possible next valid character after he has input "MUN", leading to node 50. In methods and devices of embodiments, the search is extended to sub-trees starting at nodes which indicate the character input to be an alternate spelling for the diacritical character actually represented by the node.

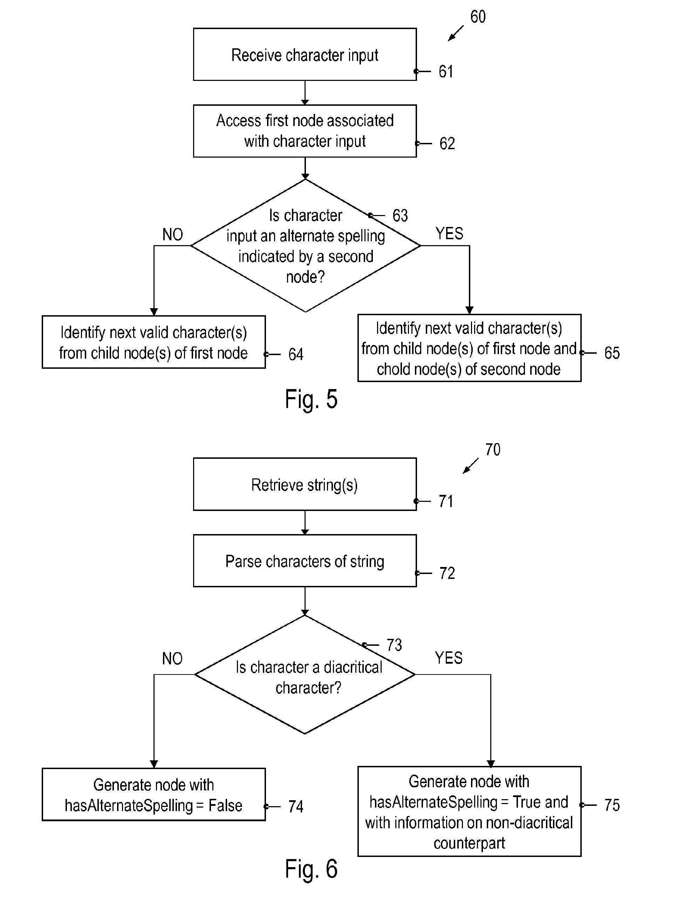

Fig. 5 is a flow chart of a method 60 for performing a next valid character search. The search is performed using a search tree in which some nodes include a predetermined indicator to indicate that there is an alternate spelling for the respective character. The method 60 may be performed by a navigation device configured as explained with reference to Fig. 1 to Fig. 4.

At 61, a character input is received. The character input may be input by a user over the input interface 5. The processor 2 may receive the character input via an interface coupled to the input interface 5. The character input may be a first character of a string or generally an n-th character of a string, with n being an integer.

At 62, a first node associated with the character input is accessed.

At 63, it is determined whether the character input is an alternate spelling indicated by a second node which has the same parent node as the first node. To this end, a set of nodes having the same parent node as the first node and including a predetermined indicator indicating that there is an alternate spelling for the respective character may be identified in a first step. In a second step, the one(s) of the nodes which indicate the character input as alternate spelling may be identified as the second node(s).

If the character input is not an alternate spelling for a character represented by a second node at the same level of the search tree, the method proceeds to 64. At 64, next valid characters may be identified from child nodes of the first node only.

If the character input is an alternate spelling for a character represented by a second node at the same level of the search tree, the method proceeds to 65. At 65, next valid characters may be identified as union of characters represented by child nodes of the first node and child nodes of the second node.

The method may then return to step 61. Steps 61-65 may be repeated until a leaf node of the search tree is reached.

Fig. 6 is a flow chart of a method 70 for generating a search tree according to an embodiment. The method 70 may be performed at a server computer separate from the navigation device. The search tree may then be transferred to a storage device of at least one navigation device. In other embodiments, the search tree may be generated locally at a navigation device.

At 71, one string or several strings are retrieved. The string(s) may correspond to a name of a city, a name of a street, a name of a POI, or words included in another textual database of a navigation device.

At 72, characters of a retrieved string are parsed. Nodes of a search tree are generated for the characters. Some of the nodes at higher levels of the search tree may have previously been generated when performing steps 72-75 for another string. Then, the generation of nodes may be limited to the lower levels of the search tree (i.e., the nodes towards the leaf nodes).

At 73, it is determined whether a parsed character is a diacritical character.

If the character is not a diacritical character, the method proceeds to 74. At 74, a node associated with the character is generated. The node is generated such that it does not include the predetermined indicator which would indicate that there is an alternate spelling. For illustration, when the predetermined indicator is set by setting a Boolean parameter hasAlternateSpelling to value TRUE, the node 74 is generated to include the Boolean parameter set to value FALSE.

If the character is a diacritical character for which an alternate spelling is to be stored, the method proceeds to 75. At 75, a node associated with the character is generated. The node is generated such that it includes the predetermined indicator which indicates that there is an alternate spelling. For illustration, a Boolean parameter hasAlternateSpelling may be set to TRUE for the node generated at 75. This information may be stored in a single, otherwise unoccupied bit of the node data. Information on the non-diacritical counterpart may also be stored in the node generated at 75. For illustration, the non-diacritical counterpart may be stored in a dedicated byte reserved for the alternate spelling in those nodes in which the Boolean parameter hasAlternateSpelling is set to TRUE.

In the method 70, diacritical characters may be identified automatically. The information on the alternate spelling which is to be supported may be stored in table. Alternate spelling for diacritical characters may also be defined by a user. It is also not required that an alternate spelling be defined for each diacritical character. For illustration, when there are variants for valid names which are distinguished from each other only by glyphs (as is the case for the city names "Münster" and "Munster", for example), it may be preferable to omit defining an alternate spelling for the umlaut-u in this specific case, i.e., the respective node in the search tree for the umlaut-u would not indicate that there is an alternate spelling.

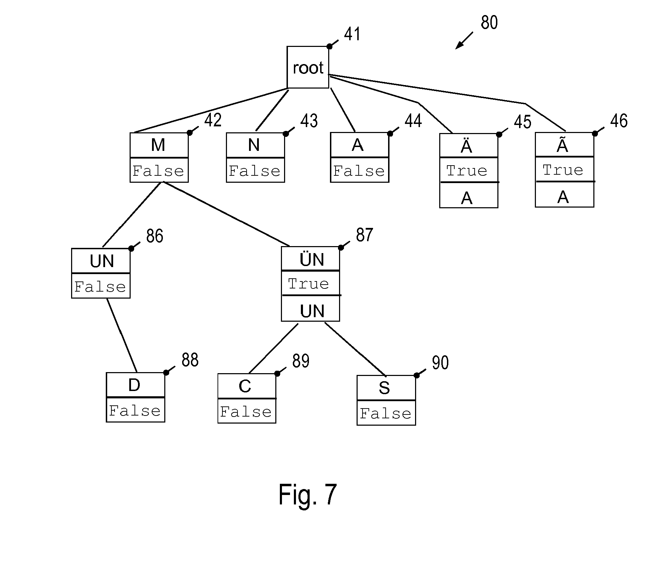

The concept of defining alternate spellings for diacritical characters may be used not only when a node is associated with one single character, but also when a node is associated with a string consisting of two or more than two characters. Then, an alternate spelling may be defined by the node in which, for example, a diacritical character is replaced by its non-diacritical counterpart in the string, as illustrated in Fig. 7.

Fig. 7 illustrates a search tree 80 according to another embodiment. The search tree 80 has nodes 41-46 as explained with reference to Fig. 4. Each one of nodes 42-46 is associated with respectively only one character.

At other levels of the search tree, nodes may also be associated with strings. For illustration, node 86 is associated with string "UN". Node 87 is associated with string "ÜN". Since the string with which node 87 is associated includes a diacritical character, the node 87 indicates that there is an alternate spelling. The node 87 may also indicate the string "UN" as alternate spelling.

Nodes 88-90 at still another level of the search tree, e.g. at the level of child nodes of nodes 86 and 87, may again be associated with one single character each.

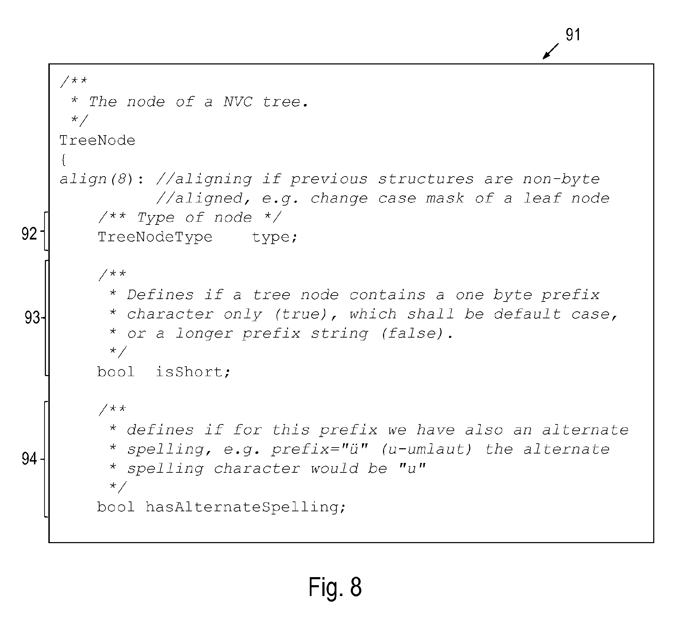

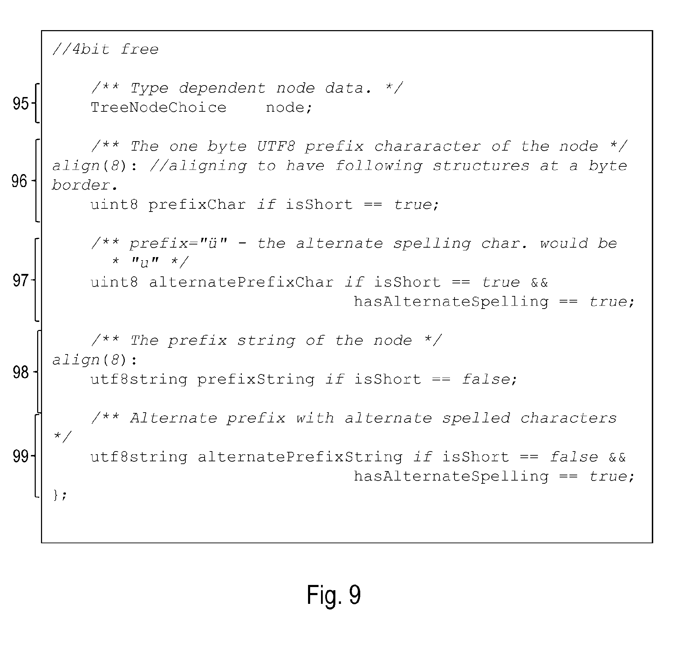

Fig. 8 and Fig. 9 illustrate an exemplary implementation of a data structure 91 of a node of the search tree. Fig. 8 shows the definition of fields for control information. Fig. 9 shows the definition of the fields reserved for indicating the character and, if applicable, alternate spelling.

Data 92 defines a field indicating a type of the tree node. The type may be defined in a few bits, e.g. two bits.

Data 93 defines a field indicating whether the node is associated with a single character (as nodes 42-46 and 88-90 in Fig. 7) or with a string (as nodes 86 and 87 in Fig. 7). This information may be stored in single bit.

Data 94 defines a field which is used for indicating whether there is an alternate spelling for the character represented by a node. As illustrated in Fig. 94, a Boolean parameter may be used which can be stored in one bit. In other implementation, more than one bit may be used, e.g. when it is desired to indicate the number of alternate spellings.

Data 95 defines a field which may include data dependent on the specific node type. For illustration, for a leaf node, other data may need to be stored in the node than for a node located at a higher level of the search tree which still has child nodes.

Data 96 and 98 define the fields which store the character(s) with which the node is associated. The field defined by data 96 is used in nodes which represent a single character (as nodes 42-46 and 88-90 in Fig. 7). The field defined by data 98 is used in nodes which represent a string (as nodes 86 and 87 in Fig. 7). One of the data fields defined by data 96 or data 98 will be present in nodes, irrespective of whether they define an alternate spelling or whether they do not define an alternate spelling.

Data 97 and 99 define the fields which store the alternate spelling for the character(s) with which the node is associated. The fields defined by data 97 or data 99 will be present only if the predetermined indicator, defined by data 94, indicates that an alternate spelling is supported. The field defined by data 97 is used in nodes which represent a single character (as nodes 45 and 46 in Fig. 7) to define an alternate spelling. The field defined by data 99 is used in nodes which represent a string (as node 87 in Fig. 7) to define an alternate spelling.

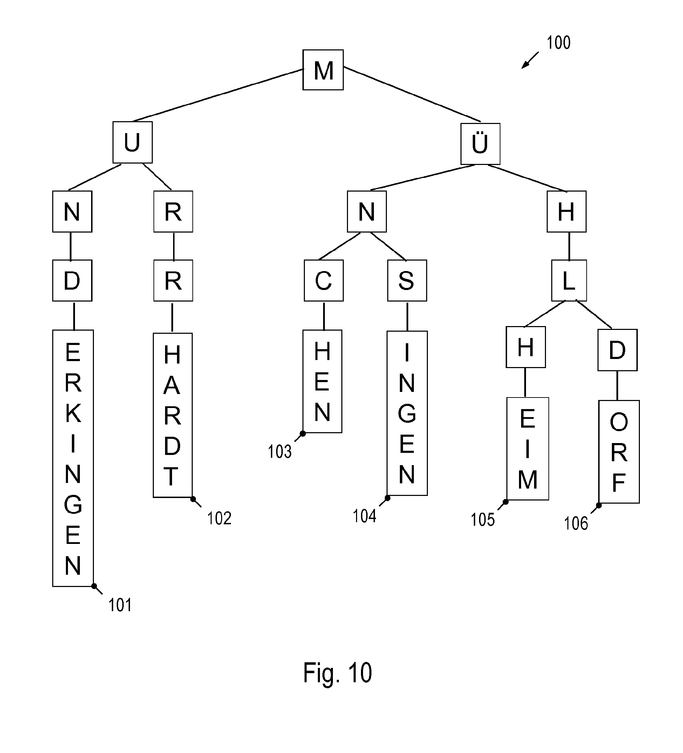

Fig. 10 illustrates a portion of a search tree 100 according to an embodiment. The search tree 100 is configured as explained with reference to Fig. 1 to Fig. 9. I.e., the node associated with the umlaut-U (node "Ü") includes a predetermined indicator to indicate that there is an alternate spelling, and may further define the character "U" without the umlaut diacritic to be the alternate spelling. Leaf nodes 101-106 may represent strings with several characters, if no further disambiguation is required. Leaf nodes 101-106 correspond to city names "Munderkingen", "Murrhardt", "München", "Münsingen", "Mühlheim", and "Mühldorf", respectively.

As explained with reference to Fig. 1 to fig. 9, even when a user starts typing a string "MUN", he will be offered "D", "C", and "S" as next valid characters. This is possible because the node associated with letter "Ü" indicates that there is an alternate spelling, and the processor 2 accordingly continues a next valid character search also in the sub-tree starting with the node for letter "Ü" even when letter "U" was entered as second character input.

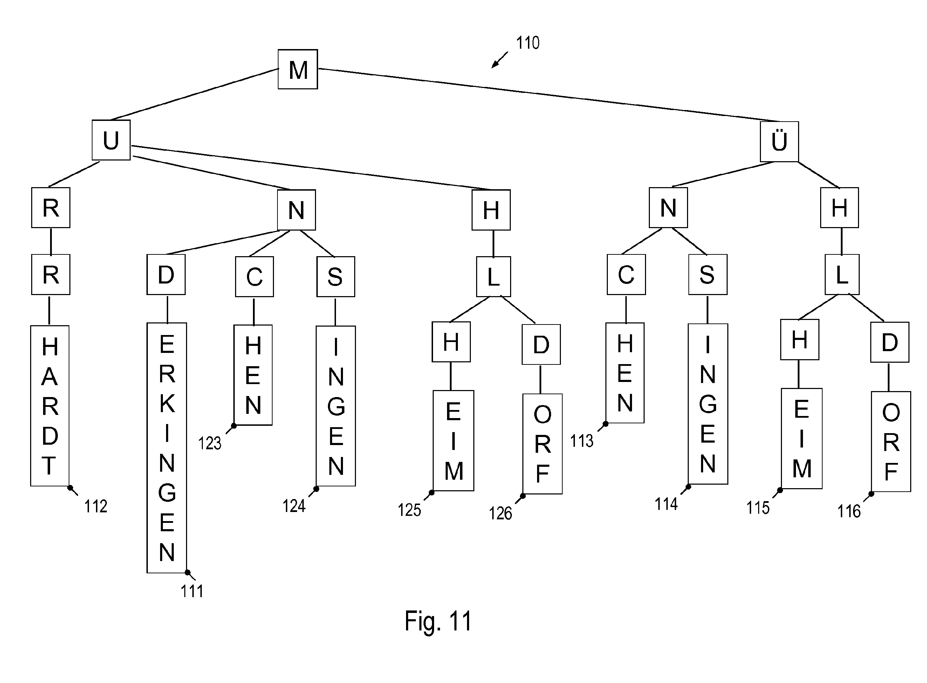

Fig. 11 illustrates a portion of another search tree 110 which is not an embodiment of the claims. The alternative search tree 110 also provides some robustness against incorrect inputting of diacritical characters, but has various shortcomings compared to the search tree explained with reference to Fig. 1 to Fig. 10.

In the search tree 110, the part of the sub-tree extending from the "Ü" node is reproduced below the node associated with its non-diacritical counterpart, i.e., the node indicated at "U". Leaf nodes 111-116 correspond to city names "Munderkingen", "Murrhardt", "München", "Münsingen", "Mühlheim", and "Mühldorf", respectively.

The search tree 110 has additional branches leading to leaf nodes 123-126. These leaf nodes correspond to "Munchen", "Munsingen", "Muhlheim", and "Muhldorf", respectively. These names are no valid city names, but derive from valid city names when replacing an umlaut character with its non-diacritical counterpart. Information on the correct city name or the correct database entry representing the city name would have to be stored at the leaf nodes 123-126.

The search trees of embodiments as explained with reference to Fig. 1 to Fig. 10 offer various effects compared to use of a search tree 110 as shown in Fig. 11.

Firstly, it is not required to duplicate complete sub-trees to various branches of the search tree to attain robustness against incorrect inputting of diacritical characters. For illustration, the search tree 100 of an embodiment does not have the branches leading to nodes 123-126 in the search tree 110. While the predetermined indicator and information on alternate spellings are stored in nodes of search trees of embodiments, this consumes less storage space than the duplication of search branches in search tree 110.

Secondly, in the search trees of embodiments, the correct string (e.g. the valid city name, street name etc.) may be determined by simply passing along a search path in the search tree. The combination of the characters associated with the traversed nodes provides the correct string. By contrast, additional processing is required in a search tree 110 as shown in Fig. 11 to translate the misspelt names "Munchen", "Munsingen", "Muhlheim", and "Muhldorf" to their valid counterparts.

While devices and methods according to embodiments have been described in detail, modifications may be implemented in other embodiments. For illustration, while search trees have been described in the context of street names, city names, or country names, the search trees may represent any one of a variety of different names, such as names of POIs.

For further illustration, while search trees have been explained in which information on the alternate spelling of a diacritical character is stored directly in a node of the search tree, this information may also be stored separately, e.g. in a table separate from the search tree.

For further illustration, while exemplary structures of search trees and their nodes have been explained, any suitable data structure may be used to implement the search tree. For illustration, the search tree may be defined in a relational data base.

For further illustration, while embodiments of the invention have been described in the context of diacritical characters which have their non-diacritical counterpart as alternate spelling, the techniques of the invention are not limited thereto. Rather, the search tree structures may also generally be used to define an admissible alternate spelling for characters.

Embodiments of the invention may be used for vehicle navigation devices.

## Claims

1. A navigation device, comprising:
a search tree (10; 40; 80; 100) which indicates next valid characters, the search tree (10; 40; 80; 100) having a plurality of nodes (12-14; 21, 25-27, 31, 35-38; 42-56; 86-90; 101-106), wherein
the nodes (12-14; 21, 25-27, 31, 35-38; 42-56; 86-90; 101-106) are respectively associated with a character, and
at least some of the nodes (14; 21; 45, 46, 48; 87) respectively include a predetermined indicator (23) to indicate that there is an alternate spelling for a character with which the respective node (14; 21; 45, 46, 48; 87) is associated; and
a processor (2) configured to receive a character input (59) and to identify at least one next valid character using the search tree (10; 40; 80; 100), the processor (2) being configured to identify the at least one next valid character in dependence on whether the predetermined indicator (23) in the search tree (10; 40; 80; 100) indicates that another character has an alternate spelling, the alternate spelling of the other character being the character input (59).

2. The navigation device of claim 1,
wherein the predetermined indicator (23) is included in nodes (14; 21; 45, 46, 48; 87) associated with a diacritical character to indicate that the diacritical character has a non-diacritical character as the alternate spelling.

3. The navigation device of claim 2,
wherein the nodes (14; 21; 45, 46, 48; 87) associated with a diacritical character further include information on the non-diacritical character which is the alternate spelling for the respective diacritical character.

4. The navigation device of claim 2 or claim 3,
wherein the processor (2) is configured to identify the at least one next valid character by accessing a sub-tree (18; 25-27; 51-53, 55, 56; 89, 90) starting at a node (14; 21; 48; 87) associated with the diacritical character when the character input (59) is a non-diacritical character (59) which is indicated as an alternate spelling for the diacritical character in the search tree (10; 40; 80; 100).

5. The navigation device of any one of the preceding claims,
wherein, for an identification of the at least one next valid character, the processor (2) is configured to access both a first node (13; 31; 47; 86) associated with the character input (59) and a second node (14; 21; 48; 87) associated with a second character different from the character input (59) if the character input (59) is an alternate spelling for the second character.

6. The navigation device of claim 5,
wherein the processor (2) identifies a union of characters associated with child nodes (35-38; 49, 50; 88) of the first node (13; 31; 47; 86) and child nodes (25-27; 51-53; 89, 90) of the second node (14; 21; 48; 87) as the at least one next valid character if the character input (59) is an alternate spelling for the second character.

7. The navigation device of claim 5 or claim 6,
wherein the first node 13; 31; 47; 86) and the second node (14; 21; 48; 87) have the same parent node (12; 20; 42).

8. The navigation device of any one of the preceding claims,
wherein each node (14; 21; 45, 46, 48; 87) which includes the predetermined indicator (23) to indicate that there is an alternate spelling further includes information (24) on a character representing the alternate spelling.

9. The navigation device of claim 8,
wherein a data field for the information (24)on the character representing the alternate spelling is selectively provided only in nodes (14; 21; 45, 46, 48; 87) which include the predetermined indicator (23) to indicate that there is an alternate spelling.

10. The navigation device of any one of the preceding claims,
wherein the predetermined indicator (23) is stored in respectively only one bit of each node (14; 21; 45, 46, 48; 87) which includes the predetermined indicator (23).

11. The navigation device of claim 10,
wherein each node (12-14; 21, 25-27, 31, 35-38; 42-56; 86-90; 101-106) includes a Boolean attribute, a first value of the Boolean attribute serving as the predetermined indicator (23) to indicate that there is an alternate spelling for a character with which the respective node (14; 21; 45, 46, 48; 87) is associated.

12. A method of determining a next valid character, said method comprising:
receiving a character input (58, 59); and
identifying at least one next valid character from a search tree (10; 40; 80; 100) which indicates next valid characters, the search tree (10; 40; 80; 100) having a plurality of nodes (12-14; 21, 25-27, 31, 35-38; 42-56; 86-90; 101-106), wherein the nodes (12-14; 21, 25-27, 31, 35-38; 42-56; 86-90; 101-106) are respectively associated with a character and at least some of the nodes (14; 21; 45, 46, 48; 87) respectively include a predetermined indicator (23) to indicate that there is an alternate spelling for a character with which the respective node (14; 21; 45, 46, 48; 87) is associated,
wherein the at least one next valid character is identified in dependence on whether the predetermined indicator (23) in the search tree (10; 40; 80; 100) indicates that another character has an alternate spelling, the alternate spelling of the other character being the character input (59).

13. The method of claim 12,
wherein the identifying the at least one next valid character comprises:
- determining next valid characters in a search sub-tree (16; 35-38) starting at a first node (13; 31; 47; 86) associated with the character input (59), and
- determining other next valid characters in another search sub-tree (15; 25-27) starting at a second node (13; 21; 48; 87) associated with the other character, the alternate spelling of the other character being the character input (59).

14. The method of claim 13,
wherein the other character is a diacritical character and the character input is a non-diacritical counterpart of the diacritical character.

15. The method of any one of claims 12 to 14,
performed by the navigation device (1) of any one of claims 1 to 11.
